# FASCICULE DE BREVET EUROPEEN

(11) **EP 3 008 031 B1**
(45) Date de publication et mention de la délivrance du brevet: **21.08.2019**
(21) Numéro de dépôt: 14729001.9
(22) Date de dépôt: 11.06.2014
(51) Int. Cl.: C04B 28/02, C04B 28/14, E04F 15/12, C04B 111/00, C04B 111/60

(54) **CHAPE THERMOCONDUCTRICE**
WÄRMELEITENDER ESTRICH
THERMOCONDUCTIVE SCREED

(30) Priorité: 12.06.2013 FR 1301395
(43) Date de publication de la demande: 20.04.2016
(73) Titulaire: Anhydritec, 84800 L'Isle-sur-la-Sorgue (FR)
(72) Inventeur: BOCQUET, Anne-Claire, F-84100 Le Pontet (FR)
(74) Mandataire: August Debouzy
(86) Numéro de dépôt international: PCT/EP2014/062061
(87) Numéro de publication internationale: WO 2014/198741

(56) Documents cités:
- WO-A1-2010/049872
- WO-A1-2013/178923
- DE-A1- 2 754 218
- DE-A1- 3 939 139
- US-A- 4 666 520
- DATABASE WPI Week 198244 Thomson Scientific, London, GB; AN 1982-94572E XP002720079, & SU 893 951 B (RASSYPNOVA T B) 30 décembre 1981 (1981-12-30)

## Description

### Domaine de l'invention

La présente invention porte sur des compositions adaptées à une utilisation en tant que chape de plancher, les compositions étant basées sur des liants hydrauliques, tels que liants de sulfate de calcium.

### État antérieur de l'invention

Une chape de plancher est utilisée dans des bâtiments pour niveler et aplanir la couche de béton sous-jacente et dans laquelle des tuyaux et des câbles sont logés. Elle joue le rôle de barrière acoustique et doit présenter une bonne conductivité thermique dans le cas où elle héberge des conduits de chauffage et de refroidissement par le sol. Une chape à auto-nivellement est un mortier liquide principalement formé à partir d'un liant hydraulique tel que ciment ou sulfate de calcium, et un agrégat, généralement du sable; elle est apportée sur le chantier par un camion malaxeur ou directement par l'intermédiaire d'un système de distribution transmix.

Les chapes de plancher basées sur des liants de sulfate de calcium sont bien connues des personnes du métier.

Le document SU893951 décrit une composition pour un revêtement de plancher à base de ciment Portland contenant 35-42% en poids de SiC par rapport au poids du liant ciment Portland. Le document DE 3939139A1 décrit une composition de chape, mortier ou béton comprenant des liants de type ciment, gypse, résine ou asphalt et des charges de type sable, gravier ou gravillons, et des additifs thermoconducteur. Le document WO2010/049872 décrit une poudre, destinée notamment à la réalisation de soies d'un four de verrerie comprenant des particules d'un matériau réfractaire, du ciment hydraulique, des fibres organiques, et éventuellement un agent tensioactif. Le document US 4 666 520 décrit un matériau composite à base de ciment avec des agrégats de carbure de silicium. Le document WO2013178923 est un document au titre de l'Article 54(3) CBE et divulgue des compositions de plâtre, destinées à la fabrication de moules de fonderie réfractaires, contenant un additif à haute conductivité thermique et haute surface spécifique. Le document DE2754218 décrit une couche de ciment pour plancher contenant un mélange de petites pièces métalliques. Des tentatives ont été mises en oeuvre pour améliorer la conductivité thermique de chapes de plancher par l'ajout de graphite expansé, tel que décrit dans DE10049230.

### Résumé de la présente invention

Un objet de la présente invention est de fournir des compositions adaptées à des chapes thermoconductrices basées sur des liants de sulfate de calcium.

La présente invention porte en outre sur des chapes de plancher et des systèmes de chauffage par le sol obtenus au moyen de compositions selon la présente invention.

La présente invention porte également sur l'utilisation de compositions selon la présente invention pour des chapes de plancher et des systèmes de chauffage par le sol.

Selon un premier aspect de la présente invention, une composition de chape de plancher est décrite, la composition contenant un liant hydraulique qui est du sulfate de calcium et un additif thermoconducteur sélectionné dans le groupe se composant de SiC, B₄C, Al₂O₃ et de combinaisons de ceux-ci.

La composition selon la présente invention contient SiC, carbure de bore et Al₂O₃. L'utilisation de ces composants présente l'avantage que l'aptitude à l'écoulement de la chape de plancher à l'état humide n'est affectée que dans une faible mesure, *voire* pas du tout, tandis que l'utilisation de graphite (naturel ou expansé) conduit à une certaine réduction de l'aptitude à l'écoulement de la chape de plancher à l'état humide.

Le terme "liant hydraulique" fait référence à ce qui est généralement entendu comme étant des liants hydrauliques c'est-à-dire des composés possédant la propriété d'hydrater en présence d'eau et d'humidité de façon à obtenir une propriété mécanique solide. Le liant hydraulique peut plus particulièrement contenir du ciment Portland conformément à la norme EN 197-1 ou du ciment alumineux. Le liant hydraulique est du sulfate de calcium.

Ce sulfate de calcium peut être du sulfate de calcium bêta et/ou du sulfate de calcium alpha d'origine naturelle ou synthétique, ou du sulfate de calcium anhydre, par exemple anhydrite II ou anhydrite III, obtenu à partir de sources de synthèse

(par exemple fluore-anhydrite) ou de sources naturelles, par exemple par calcination de gypse naturel ou synthétique (par exemple à partir de la désulfuration de gypse FGD). Des exemples de processus de calcination adaptés sont le processus de calcination classique ou le processus Rocal™. On peut utiliser des mélanges de différentes sources de sulfate de calcium. La chape de la présente invention satisfait généralement aux exigences des normes européennes EN 13454-1 (liant) et EN 13813 (mortier) pour le sulfate de calcium destiné à des mortiers et liants de chape fluides.

Le sulfate de calcium, généralement sous la forme anhydride, peut contenir au moins 50% en poids de sulfate de calcium, de préférence au moins 85% ou même de manière significative 100%.

La chape peut comprendre en outre des charges de différents types (calcaire, silice, vapeur de silice, cendre volante peuvent être utilisés en plus du sulfate de calcium).

Selon l'invention, le liant hydraulique est du sulfate de calcium.

Le sulfate de calcium utilisé est de préférence sulfate de calcium anhydride.

Selon l'invention, la quantité d'additif thermoconducteur est inférieure à 12% en poids, le pourcentage en poids étant basé sur le poids dudit liant hydraulique.

Le pourcentage en poids "X% en poids" de l'additif thermoconducteur signifie que X grammes d'additif thermoconducteur sont utilisés par 100 grammes de liant hydraulique.

L'utilisation d'un additif thermoconducteur contenant SiC, B₄C, Al₂O₃ et/ou des combinaisons de ceux-ci entraîne des valeurs plus élevées de conductivité thermique en comparaison de graphite non expansé.

Si la quantité d'additif thermoconducteur contenant SiC, B₄C, Al₂O₃ et des combinaisons de ceux-ci est supérieure à 12% en poids par rapport au poids de liant hydraulique, le coût de la formulation pour une utilisation en tant que chape est trop élevé, l'ajout supplémentaire n'apportant qu'une augmentation additionnelle faible de conductivité thermique, et il existe une réduction potentielle des performances mécaniques.

En dépit du faible dosage d'additif thermoconducteur contenant SiC, B₄C, Al₂O₃ et des combinaisons de ceux-ci dans la composition selon la présente invention, une augmentation de la conductivité thermique est obtenue et des valeurs de conductivité thermique, telles que mesurées selon NF EN 993-15, d'au moins 1,8 W/m.K, voire de 2 W/m.K ou plus, ou 2,2 W/m.K ou plus ou même 2,8 W/m.K ou plus peuvent être obtenues. La faible quantité d'additif thermoconducteur contenant SiC, B₄C, Al₂O₃ et des combinaisons de ceux-ci dans la composition selon la présente invention offre d'autres avantages tels qu'une faible génération de poussière additionnelle et une facilité d'incorporation sans flottement excessif dans un milieu aqueux. De plus, la résistance mécanique de la chape n'est que faiblement voire pas du tout altérée et son temps de prise à peine voire pas du tout affecté.

Selon l'invention, la composition contient un additif thermoconducteur dans une quantité d'au moins 0,4% en poids, le pourcentage en poids étant basé sur le poids dudit liant hydraulique.

La composition de chape de plancher selon la présente invention contient un additif thermoconducteur contenant SiC, B₄C, Al₂O₃ et des combinaisons de
ceux-ci de préférence dans une quantité de 0,4 à 6% en poids par rapport au poids du liant hydraulique. Des compositions contenant un additif thermoconducteur contenant SiC, B₄C, Al₂O₃ et des combinaisons de ceux-ci dans une quantité de 0,4 à 4% en poids par rapport au poids du liant hydraulique sont plus particulièrement préférés.

Les particulats de l'additif thermoconducteur contenant SiC, B₄C, Al₂O₃ et des combinaisons de ceux-ci peuvent présenter une masse volumique allant de 0,5 g/cm³ à 1,6 g/cm³ mesuré par ASTM n°E 153-59 T.

Selon certains modes de réalisation, l'additif thermoconducteur peut contenir particulats qui possèdent une taille de particule moyenne D50, telle que mesurée par diffraction laser, allant de 1 à 100 µm.

Les particulats de l'additif thermoconducteur peuvent présenter une taille de particule moyenne D50, telle que mesurée par diffraction laser, allant de 20 à 60 µm.

La composition de chape de plancher comprend généralement un granulat, tel que du sable, et peut contenir d'autres additifs tels que plastifiants, agents anti-moussants, agents fluidifiants, superplastifiants et dispersants ou graphite naturel ou expansé.

Selon certains modes de réalisation, l'additif thermoconducteur peut être présent dans une quantité inférieure à 2,5% en poids, le pourcentage en poids étant basé sur le poids de ladite composition de chape de plancher.

Ce pourcentage en poids "X% en poids" de l'additif thermoconducteur signifie que X grammes d'additif thermoconducteur sont utilisés par 100 grammes de la composition de chape de plancher sous une forme versable, c'est-à-dire prête à être utilisée pour fournir la chape de plancher sur le chantier.

La composition de chape de plancher selon fa présente invention comprend un additif thermoconducteur contenant SiC, B₄C, Al₂O₃ et des combinaisons de ceux-ci, de préférence dans une quantité inférieure à 1,5% en poids, le pourcentage en poids étant basé sur le poids de ladite composition de chape de plancher. Une chape de plancher comprenant un additif thermoconducteur contenant SiC, B₄C, Al₂O₃ et des combinaisons de ceux-ci dans une quantité de 0,001 à 2,5% en poids, par exemple dans la plage de 0,001% en poids à 1,5% en poids avec ledit pourcentage en poids étant basé sur le poids de ladite composition de chape de plancher, est plus particulièrement préférée.

Selon certains modes de réalisation, la composition de chape de plancher peut comprendre en outre un agent anti-moussant.

Selon certains modes de réalisation, l'agent anti-moussant peut être sélectionné parmi agents anti-moussants à base de silicone, acides gras, esters, polypropylènes-glycols, et des combinaisons de ceux-ci.

La quantité d'agent anti-moussant se situe de préférence entre 0,01 et 2% en poids, et de préférence encore entre 0,01 et 0,5% en poids, le pourcentage en poids étant basé sur le poids dudit liant hydraulique.

Selon certains modes de réalisation, la composition de chape de plancher peut comprendre en outre des agents fluidifiants et/ou des dispersants et/ou des plastifiants et/ou des superplastifiants.

Selon certains modes de réalisation, les agents fluidifiants et/ou dispersants et/ou plastifiants et/ou superplastifiants peuvent être sélectionnés parmi des produits de condensation sulfonés de formaldéhyde et de naphtalène, des produits de condensation sulfonés de formaldéhyde et de mélamine, des copolymères ramifiés en peigne possédant une chaîne principale d'acide acrylique et métacrylique, estérifiés avec des polycabroxylates ou des polyoxyalkylènes, tels que polyoxyéthylènes, et des combinaisons de ceux-ci.

La quantité totale d'agents fluidifiants et/ou dispersants et/ou plastifiants et/ou superplastifiants se situe de préférence entre 0,01 et 2% en poids, et de préférence encore entre 0,02 et 1% en poids, le pourcentage en poids étant basé sur le poids dudit liant hydraulique.

Lorsque des agents fluidifiants et/ou dispersants et/ou plastifiants et/ou superplastifiants sont utilisés et un agent anti-moussant est utilisé, le rapport de poids agent anti-moussant sur agents fluidifiants et/ou dispersants et/ou plastifiants et/ou superplastifiants se situe entre 0,005 et 200, de préférence entre 0,05 et 20.

La composition de chape de plancher est combinée et mélangée avec de l'eau de façon à former une chape de plancher adaptée à l'état humide. Après application de la chape de plancher humide, la chape durcit et évapore une partie de l'eau. La chape de plancher ainsi obtenue est dans un état sec. Le rapport poids de l'eau/sulfate de calcium se situe de préférence entre 0,27 et 0,70, et de préférence encore entre 0,35 et 0,55, par exemple entre 0,35 et 0,45.

Selon un deuxième aspect de la présente invention, la composition de chape de plancher selon le premier aspect de la présente invention est utilisée pour la fabrication d'une chape de plancher.

Selon certains modes de réalisation, la chape de plancher peut être fournie avec une conductivité thermique mesurée selon NF EN 993-15 d'au moins 1,8 W/m.K. Selon certains modes de réalisation, la composition de chape de plancher comprend en outre un granulat.

Selon un deuxième aspect de la présente invention, un procédé de réalisation d'une composition de chape de plancher est décrit, le procédé comprenant :
- la fourniture d'un liant hydraulique qui est du sulfate de calcium,
- la fourniture de SiC, B₄C, Al₂O₃ et/ou de combinaisons de ceux-ci de sorte que la quantité de SiC, B₄C, Al₂O₃ et/ou des combinaisons de ceux-ci soit d'au moins 0,4% en poids et inférieure à 12% en poids, le pourcentage en poids étant basé sur le poids du liant hydraulique
- l'ajout de SiC, B₄C, Al₂O₃ et/ou de combinaisons de ceux-ci au liant hydraulique de façon à fournir une composition de chape de plancher,
ladite composition comprenant en outre un agent anti-moussant et/ou des agents fluidifiants et/ou dispersants et/ou plastifiants et/ou superplastifiants,
ledit agent anti-moussant étant sélectionné parmi agents anti-moussants à base de silicone, acides gras, esters, polypropylènes-glycols, et des combinaisons de ceux-ci, lesdits agents fluidifiants et/ou dispersants et/ou plastifiants et/ou superplastifiants étant sélectionnés parmi des produits de condensation sulfonés de formaldéhyde et de naphtalène, des produits de condensation sulfonés de formaldéhyde et de mélamine, des copolymères ramifiés en peigne possédant une chaîne principale d'acide acrylique et méthacrylique, estérifiés avec des polycarboxylates ou des polyoxyalkylènes, tels que polyoxyéthylènes, et des combinaisons de ceux-ci.

Selon certains modes de réalisation, l'ajout d'un liant hydraulique et de SiC, B₄C, Al₂O₃ et/ou de combinaisons de ceux-ci est exécuté en présence d'eau.

Selon certains modes de réalisation, au moins une partie de SiC, B₄C, Al₂O₃ et/ou de combinaisons de ceux-ci peut être ajoutée au liant hydraulique contenu dans un récipient hydrosoluble.

Ce récipient peut par exemple être un sac hydrosoluble, par exemple un sac à base d'alcool polyvinylique.

Selon certains modes de réalisation, au moins une partie de SiC, B₄C, Al₂O₃ et/ou de combinaisons de ceux-ci peut être fournie conjointement avec l'eau.

Selon certains modes de réalisation, au moins une partie de SiC, B₄C, Al₂O₃ et/ou de combinaisons de ceux-ci peut être fournie conjointement avec le liant hydraulique. Les Revendications indépendantes et dépendantes décrivent des caractéristiques particulières et préférées de la présente invention. Des caractéristiques des Revendications dépendantes peuvent être combinées à des caractéristiques des Revendications indépendantes ou d'autres Revendications dépendantes, et/ou à des caractéristiques décrites dans la description ci-dessous et/ou ci-après le cas échéant.

Les caractéristiques et avantages ci-dessus et d'autres de la présente invention deviendront évidents à partir de la description détaillée ci-après qui illustre, au moyen d'exemples, les principes de la présente invention. Cette description est donnée à titre d'exemple uniquement sans limiter la portée de la présente invention.

### Description de modes de réalisation donnés à titre d'exemple

La présente invention est décrite par rapport à des modes de réalisation particuliers.

Il convient de noter que le terme "comprenant", utilisé dans les Revendications, ne doit pas être interprété comme étant restreint aux moyens énumérés ci-après ; il n'exclut pas d'autres éléments ou opérations. Il doit donc être interprété comme spécifiant la présence des caractéristiques indiquées, des opérations ou composants dont il est fait mention mais n'interdit pas la présence ou l'ajout d'une ou de plusieurs autres caractéristiques, opérations ou composants, ou groupes de ceux-ci. Ainsi, la portée de l'expression "un dispositif comprenant les moyens A et B" ne doit pas être limitée à des dispositifs comportant uniquement les composants A et B. Elle signifie que par rapport à la présente invention, les seuls composants pertinents du dispositif sont A et B.

Dans la présente spécification, il est fait référence à "un mode de réalisation". Une telle référence indique qu'une caractéristique particulière, décrite en relation avec le mode de réalisation, est incluse dans au moins un mode de réalisation de la présente invention. En conséquence, des occurrences de l'expression "dans un mode de réalisation" en divers points de la présente spécification ne font pas nécessairement toutes référence au même mode de réalisation, bien que ce soit possible. De plus, les caractéristiques particulières peuvent être combinées selon toute manière adaptée en un ou plusieurs modes de réalisation, comme pourra le noter une personne du métier.

### EXEMPLES

Les produits suivants ont été utilisés pour la préparation des compositions dans les exemples :
- Sulfate de calcium (CaSO₄) qui est le liant nommé CAp et disponible auprès de La Chape liquide,
- Sable qui est 0/4 Perrin (Dmax 4 mm),
- Graphite expansé (Exp. C) : Timrex® C-Therm™ 012 commercialisé par Timcal,
- Graphite naturel (Nat. C) : Timrex® 50x100 commercialisé par Timcal,
- Carbure de silicium (SiC) commercialisé sous le nom de F600 par LAMPLAN,
- Carbure de bore (B₄C) commercialisé sous le nom de F120 par LAMPLAN
- Oxyde d'aluminium (Al₂O₃) commercialisé sous le nom de F1200 par LAMPLAN

Le Tableau 1 résume les compositions des mortiers qui ont été préparés et testés comme suit :

### 1 : préparation de mortier

Le liant (CaSO₄) et l'additif sont pesés et mélangés pendant 5 mn avec un mélangeur turbula. Le sable est pesé, et le volume d'eau est défini et pesé également.

En premier lieu, l'eau est introduite dans le mélangeur. Le liant prémélangé avec l'additif est ajouté et mélangé pendant 30 s à 140 tr/mn, après quoi le sable est ajouté.

La procédure de mélange est réalisée selon la norme EN 196-1.

### 2 : échantillon de test

Après mélange, le mortier est versé dans deux moules 14x16x4 cm.

Laisser sécher pendant 28 jours (à 20°C / 65% d'humidité relative) avant de tester. Les résultats des tests ont également été ajoutés au Tableau 1. La quantité des additifs qui ont été testés en tant qu'amplificateurs de conductivité thermique (c'est-à-dire graphite expansé, graphite naturel non expansé, carbure de silicium, carbure de bore et oxyde d'aluminium) est exprimée en pourcentage en poids par rapport au poids du sulfate de calcium. La conductivité thermique (λ) a été mesurée sur des échantillons de test de 14x16x4 cm selon la norme NF EN 993-15.

Les résultats du Tableau 1 indiquent que des compositions contenant le graphite expansé au même niveau de dosage exprimé en pourcentage en poids par rapport au liant donnent des conductivités thermiques plus élevées.

**Tableau 1**

| | CaSO₄ | Sable | Eau | Exp. C | Nat. C | SiC | B₄C | Al₂O₃ | λ |
|---|---|---|---|---|---|---|---|---|---|
| unité | kg/m³ | kg/m³ | l/m³ | % en poids | % en poids | % en poids | % en poids | % en poids | W/m.K |
| 1a | 650 | 1240 | 300 | 3 | | | | | 2,7 |
| 1b | 650 | 1240 | 300 | 6 | | | | | 3,3 |
| 2 | 650 | 1240 | 300 | | | | | | 1,9 |
| 3a | 650 | 1240 | 300 | | 3 | | | | 2,1 |
| 3b | 650 | 1240 | 300 | | 6 | | | | 2,5 |
| 3c | 650 | 1240 | 300 | | 11,5 | | | | 2,6 |
| 4a | 650 | 1240 | 300 | | | 3 | | | 2,1 |
| 4b | 650 | 1240 | 300 | | | 6 | | | 2,1 |
| 4c | 650 | 1240 | 300 | | | 11,5 | | | 2,2 |
| 5a | 650 | 1240 | 300 | | | | 3 | | 2,0 |
| 5b | 650 | 1240 | 300 | | | | 6 | | 2,1 |
| 5c | 650 | 1240 | 300 | | | | 11,5 | | 2,2 |
| 6a | 650 | 1240 | 300 | | | | | 3 | 2,1 |
| 6b | 650 | 1240 | 300 | | | | | 6 | 2,2 |
| 6c | 650 | 1240 | 300 | | | | | 11,5 | 2,1 |

| | | | | | | | | | |
|---|---|---|---|---|---|---|---|---|---|
| Les pourcentages en poids sont basés sur le poids de CaSO₄. | | | | | | | | | |

Il convient de noter que, bien que des modes de réalisation et/ou des matériaux préférés aient été décrits pour la fourniture de modes de réalisation selon la présente invention, diverses modifications ou changements peuvent être apportés sans s'éloigner de la portée et de l'esprit de la présente invention.

## Revendications

1. Utilisation d'une composition de chape de plancher pour la fabrication d'une chape de plancher, ladite composition contenant un liant hydraulique qui est du sulfate de calcium et un additif thermoconducteur sélectionné dans le groupe se composant de SiC, B₄C, Al₂O₃ et de combinaisons de ceux-ci et où la quantité d'additif thermoconducteur est d'au moins 0,4% en poids et est inférieure à 12% en poids, le pourcentage en poids étant basé sur le poids dudit liant hydraulique.

2. Utilisation selon la revendication 1 où l'additif thermoconducteur comprend des particulats qui possèdent une taille de particule moyenne D50, telle que mesurée par diffraction laser, allant de 1 à 100 µm.

3. Utilisation selon l'une quelconque des Revendications précédentes où l'additif thermoconducteur comprend des particulats qui possèdent une taille de particule moyenne D50, telle que mesurée par diffraction laser, allant de 20 à 60 µm.

4. Utilisation selon l'une quelconque des Revendications précédentes, où l'additif thermoconducteur est présent dans une quantité inférieure à 2,5% en poids, le pourcentage en poids étant basé sur le poids de ladite composition de chape de plancher.

5. Utilisation selon l'une quelconque des Revendications précédentes, où la composition de chape de plancher contient en outre un agent anti-moussant.

6. Utilisation selon la Revendication 5, où ledit agent anti-moussant est sélectionné parmi agents anti-moussants à base de silicone, acides gras, esters, polypropylènes-glycols, et des combinaisons de ceux-ci.

7. Utilisation selon l'une quelconque des Revendications précédentes, où la composition de chape de plancher contient en outre des agents fluidifiants et/ou dispersants et/ou plastifiants et/ou superplastifiants.

8. Utilisation selon la Revendication 7, où lesdits agents fluidifiants et/ou dispersants et/ou plastifiants et/ou superplastifiants sont sélectionnés parmi des produits de condensation sulfonés de formaldéhyde et de naphtalène, des produits de condensation sulfonés de formaldéhyde et de mélamine, des copolymères ramifiés en peigne possédant une chaîne principale d'acide acrylique et métacrylique, estérifiés avec des polycabroxylates ou des polyoxyalkylènes, tels que polyoxyéthylènes, et des combinaisons de ceux-ci.

9. L'utilisation selon l'une quelconque des revendications précédentes, où une chape de plancher est fournie possédant une conductivité thermique mesurée selon NF EN 993-15 d'au moins 1,8 W/m.K.

10. Un procédé destiné à la fourniture d'une composition de chape de plancher, le procédé comprenant :
- la fourniture d'un liant hydraulique qui est du sulfate de calcium,
- la fourniture de SiC, B₄C, Al₂O₃ et/ou de combinaisons de ceux-ci de sorte que la quantité de SiC, B₄C, Al₂O₃ et/ou des combinaisons de ceux-ci soit d'au moins 0,4% en poids et inférieure à 12% en poids, le pourcentage en poids étant basé sur le poids du liant hydraulique
- l'ajout de SiC, B₄C, Al₂O₃ et/ou de combinaisons de ceux-ci au liant hydraulique de façon à fournir une composition de chape de plancher,
ladite composition comprenant en outre un agent anti-moussant et/ou des agents fluidifiants et/ou dispersants et/ou plastifiants et/ou superplastifiants, ledit agent anti-moussant étant sélectionné parmi agents anti-moussants à base de silicone, acides gras, esters, polypropylènes-glycols, et des combinaisons de ceux-ci,
lesdits agents fluidifiants et/ou dispersants et/ou plastifiants et/ou superplastifiants étant sélectionnés parmi des produits de condensation sulfonés de formaldéhyde et de naphtalène, des produits de condensation sulfonés de formaldéhyde et de mélamine, des copolymères ramifiés en peigne possédant une chaîne principale d'acide acrylique et méthacrylique, estérifiés avec des polycarboxylates ou des polyoxyalkylènes, tels que polyoxyéthylènes, et des combinaisons de ceux-ci.

11. Une composition de chape de plancher, ladite composition contenant un liant hydraulique qui est du sulfate de calcium et un additif thermoconducteur sélectionné dans le groupe se composant de SiC, B₄C, Al₂O₃ et de combinaisons de ceux-ci et où la quantité d'additif thermoconducteur est d'au moins 0,4% en poids et est inférieure à 12% en poids, le pourcentage en poids étant basé sur le poids dudit liant hydraulique,
ladite composition comprenant en outre un agent anti-moussant et/ou des agents fluidifiants et/ou dispersants et/ou plastifiants et/ou superplastifiants,
ledit agent anti-moussant étant sélectionné parmi agents anti-moussants à base de silicone, acides gras, esters, polypropylènes-glycols, et des combinaisons de ceux-ci,
lesdits agents fluidifiants et/ou dispersants et/ou plastifiants et/ou superplastifiants étant sélectionnés parmi des produits de condensation sulfonés de formaldéhyde et de naphtalène, des produits de condensation sulfonés de formaldéhyde et de mélamine, des copolymères ramifiés en peigne possédant une chaîne principale d'acide acrylique et méthacrylique, estérifiés avec des polycarboxylates ou des polyoxyalkylènes, tels que polyoxyéthylènes, et des combinaisons de ceux-ci.

12. Composition selon la revendication 11, où l'additif thermoconducteur comprend des particulats qui possèdent une taille de particule moyenne D50, telle que mesurée par diffraction laser, allant de 1 à 100 µm, de préférence de 20 à 60 µm.

13. Composition selon l'une quelconque des revendications 11 ou 12, où l'additif thermoconducteur est présent dans une quantité inférieure à 2,5% en poids, le pourcentage en poids étant basé sur le poids de ladite composition de chape de plancher.

## Patentansprüche

1. Verwendung einer Fussbodenestrichzusammensetzung zur Herstellung eines Fussbodenestrichs, wobei die Zusammensetzung ein hydraulisches Bindemittel, bei dem es sich um Kalziumsulfat handelt, und einen wärmeleitenden Zusatz, der aus der Gruppe von SiC, B4C, Al2O3 und Kombinationen davon gewählt ist, enthält, wobei der wärmeleitende Zusatzstoff zu mindestens 0,4 Gew. % und zu weniger als 12 Gew. % darin enthalten ist, wobei sich der Gewichtsprozentanteil auf das Gewicht des hydraulischen Bindemittels bezieht.

2. Verwendung nach Anspruch 1, wobei der wärmeleitende Zusatzstoff umfasst: Partikel, die eine mittels Laserbeugung gemessene durchschnittliche Partikelgröße D50 von 1 - 100 µm aufweisen.

3. Verwendung nach einem der vorstehenden Ansprüche, wobei
der wärmeleitende Zusatzstoff Partikel enthält, die eine mittels Laserbeugung gemessene durchschnittliche Partikelgröße D50 von 20 - 60 µm aufweisen.

4. Verwendung nach einem der vorstehenden Ansprüche, wobei
der wärmeleitende Zusatzstoff zu weniger als 2,5 Gew. % enthalten ist, wobei sich der Gewichtsprozentanteil auf das Gewicht der Fussbodenestrichzusammensetzung bezieht.

5. Verwendung nach einem der vorstehenden Ansprüche, wobei die Fussbodenestrichzusammensetzung ferner ein Antischaummittel enthält.

6. Verwendung nach Anspruch 5, wobei das Antischaummittel aus den Antischaummitteln auf Silikon-, Fettsäure-, Ester- und Polypropylenglykolbasis und Kombinationen davon gewählt ist.

7. Verwendung nach einem der vorstehenden Ansprüche, wobei die Fussbodenestrichzusammensetzung ferner Fließverbesserer und/oder Dispergiermittel und/oder Weichmacher und/oder Superplastifiziermittel enthält.

8. Verwendung nach Anspruch 7, wobei die Fließverbesserer und/oder Dispergiermittel und/oder Weichmacher und/oder Superplastifiziermittel aus der nachfolgenden Gruppe gewählt sind: sulfonierte Formaldehyd- und Naphthalinkondensationsprodukte, sulfonierte Formaldehyd- und Melaminkondensationsprodukte, verzweigte Kamm-Copolymere mit einer Hauptkette aus Acryl- und Methacrylsäure, die mit Polycarboxylaten oder Polyoxyalkylenen wie z.B. Polyoxyethylenen verestert sind, und Kombinationen davon.

9. Verwendung nach einem der vorstehenden Ansprüche, wobei ein Fussbodenestrich mit einer nach NF EN 993-15 gemessenen Wärmeleitung von mindestens 1,8 W/m.K bereitgestellt wird.

10. Verfahren zur Bereitstellung einer Fussbodenestrichzusammensetzung, wobei das Verfahren umfasst:
- Vorsehen eines hydraulischen Bindemittels, bei dem es sich um Kalziumsulfat handelt,
- Vorsehen von SiC, B₄C, Al₂O₃ und/oder Kombinationen davon, sodass die Menge an SiC, B₄C, Al₂O₃ und/oder Kombinationen davon mindestens 0,4 Gew. % und weniger als 12 Gew. % beträgt, wobei sich der Gewichtsprozentanteil auf das gewicht des hydraulischen Bindemittels bezieht,
- Hinzugeben von Sic, B₄C, Al₂O₃ und/oder Kombinationen davon zum hydraulischen Bindemittel, sodass sich eine Fussbodenestrichzusammensetzung ergibt,
wobei die Zusammensetzung ferner ein Antischaummittel und/oder Fließverbesserer und/oder Dispergiermittel und/oder Weichmacher und/oder Superplastifiziermittel umfasst, wobei das Antischaummitel aus den Antischaummitteln auf Silikon-, Fettsäure-, Ester- und Polypropylenglykolbasis und Kombinationen davon gewählt ist, wobei die Fließverbesserer und/oder Dispergiermittel und/oder Weichmacher und/oder Superplastifiziermittel aus der nachfolgenden Gruppe gewählt sind: sulfonierte Formaldehyd- und Naphthalinkondensationsprodukte, sulfonierte Formaldehyd- und Melaminkondensationsprodukte, verzweigte Kamm-Copolymere mit einer Hauptkette aus Acryl- und Methacrylsäure, die mit Polycarboxylaten oder Polyoxyalkylenen wie z.B. Polyoxyethylenen verestert sind, und Kombinationen davon.

11. Fussbodenestrichzusammensetzung, wobei die Zusammensetzung ein hydraulisches Bindemittel, bei dem es sich um Kalziumsulfat handelt, und einen wärmeleitenden Zusatz, der aus der Gruppe von SiC, B₄C, Al₂O₃ und Kombinationen davon gewählt ist, enthält, wobei der wärmeleitende Zusatzstoff zu mindestens 0,4 Gew. % und zu weniger als 12 Gew. % darin enthalten ist, wobei sich der Gewichtsprozentanteil auf das Gewicht des hydraulischen Bindemittels bezieht, wobei die Zusammensetzung ferner ein Antischaummittel und/oder Fließverbesserer und/oder Dispergiermittel und/oder Weichmacher und/oder Superplastifiziermittel umfasst, wobei das Antischaummitel aus den Antischaummitteln auf Silikon-, Fettsäure-, Ester- und Polypropylenglykolbasis und Kombinationen davon gewählt ist, wobei die Fließverbesserer und/oder Dispergiermittel und/oder Weichmacher und/oder Superplastifiziermittel aus der nachfolgenden Gruppe gewählt sind: sulfonierte Formaldehyd- und Naphthalinkondensationsprodukte, sulfonierte Formaldehyd- und Melaminkondensationsprodukte, verzweigte Kamm-Copolymere mit einer Hauptkette aus Acryl- und Methacrylsäure, die mit Polycarboxylaten oder Polyoxyalkylenen wie z.B. Polyoxyethylenen verestert sind, und Kombinationen davon.

12. Zusammensetzung nach Anspruch 11, wobei der wärmeleitende Zusatzstoff Partikel enthält, die eine mittels Laserbeugung gemessene durchschnittliche Partikelgröße D50 von 1 - 100 µm, vorzugsweise 20 - 60 µm aufweisen.

13. Zusammensetzung nach einem der Ansprüche 11 oder 12, wobei der wärmeleitende Zusatzstoff zu weniger als 2,5 Gew. % enthalten ist, wobei sich der Gewichtsprozentanteil auf das Gewicht der Fussbodenestrichzusammensetzung bezieht.

## Claims

1. Use of a floor screed composition for the manufacture of a floor screed, said composition containing a hydraulic binder which is calcium sulfate and a thermally-conductive additive selected from the group consisting of SiC, B₄C, Al₂O₃ and combinations thereof and wherein the amount of the thermally-conductive additive is at least 0.4% by weight and less than 12% by weight, the weight percentage being based on the weight of said hydraulic binder.

2. Use according to claim 1 wherein the thermally-conductive additive comprises particles which have an average particle size D50, as measured by laser diffraction, ranging from 1 to 100 µm.

3. Use according to any one of the preceding claims wherein the thermally-conductive additive comprises particles which have an average particle size D50, as measured by laser diffraction, ranging from 20 to 60 µm.

4. Use according to any one of the preceding claims, wherein the thermally-conductive additive is present in an amount of less than 2.5% by weight, the weight percentage being based on the weight of said floor screed composition.

5. Use according to any one of the preceding claims, wherein the floor screed composition further contains an antifoaming agent.

6. Use according to claim 5, wherein said is selected from anti-foaming agents based on silicone, fatty acids, esters, polypropylenes-glycols, and combinations thereof.

7. Use according to any one of the preceding claims, wherein the floor screed composition further contains fluidizing and/or dispersing and/or plasticizing and/or superplasticizing agents.

8. Use according to claim 7, wherein said fluidizing and/or dispersing and/or plasticizing and/or superplasticizing agents are selected from sulfonated condensation products of formaldehyde and naphthalene, sulfonated condensation products of formaldehyde and melamine, branched comb copolymers having a main chain of acrylic and methacrylic acid, esterified with polycarboxylates or polyoxyalkylenes, such as polyoxyethylenes, and combinations thereof.

9. Use according to any one of the preceding claims, wherein a floor screed is provided having a thermal conductivity measured according to NF EN 993-15 of at least 1.8 W/m.K.

10. Method for providing a floor screed composition, the method comprising:
- the provision of a hydraulic binder which is calcium sulfate,
- the provision of SiC, B₄C, Al₂O₃ and/or combinations thereof so that the amount of SiC, B₄C, Al₂O₃ and/or combinations thereof, is at least 0.4% by weight and less than 12% by weight, the weight percentage being based on the weight of the hydraulic binder
- the addition of SiC, B₄C, Al₂O₃ and/or combinations thereof to the hydraulic binder in order to provide a floor screed composition, said composition further comprising an anti-foaming agent and/or fluidizing and/or dispersing and/or plasticizing and/or superplasticizing agents, said anti-foaming agent being selected from anti-foaming agents based on silicone, fatty acids, esters, polypropylenes-glycols, and combinations thereof,
- said fluidizing and/or dispersing and/or plasticizing and/or superplasticizing agents being selected from sulfonated condensation products of formaldehyde and naphthalene, sulfonated condensation products of formaldehyde and melamine, branched comb copolymers having a main chain acrylic and methacrylic acid, esterified with polycarboxylates or polyoxyalkylenes, such as polyoxyethylenes, and combinations thereof.

11. Floor screed composition,
- said composition containing a hydraulic binder which is calcium sulfate and a thermally-conductive additive selected from the group consisting of SiC, B₄C, Al₂O₃ and combinations thereof and wherein the amount of thermally-conductive additive is at least 0.4% by weight and is less than 12% by weight, the weight percentage being based on the weight of said hydraulic binder,
- said composition further comprising an anti-foaming agent and/or fluidizing and/or dispersing and/or plasticizing and/or superplasticizing agents,
- said anti-foaming agent being selected from anti-foaming agents based on silicone, fatty acids, esters, polypropylenes-glycols, and combinations thereof,
- said fluidizing and/or dispersing and/or plasticizing and/or superplasticizing agents being selected from sulfonated condensation products of formaldehyde and naphthalene, sulfonated condensation products of formaldehyde and melamine, branched comb copolymers having a main chain acrylic and methacrylic acid, esterified with polycarboxylates or polyoxyalkylenes, such as polyoxyethylenes, and combinations thereof.

12. Composition according to claim 11, wherein the thermally-conductive additive comprises particles having a mean particle size of D50 as measured by laser diffraction, range from 1 to 100 µm, preferably from 20 to 60 µm.

13. Composition according to any one of claims 11 or 12, wherein the thermally-conductive additive is present in an amount of less than 2.5% by weight, the weight percentage being based on the weight of said floor screed composition .
